(19) Europäisches Patentamt

European Patent Office

Office européen des brevets

(11) **EP 1 666 411 A1**

(12) **EUROPEAN PATENT APPLICATION**

(43) Date of publication:
**07.06.2006 Bulletin 2006/23**

(51) Int Cl.:
*C01B 9/08* (2006.01)     *C01F 5/28* (2006.01)
*C01F 7/50* (2006.01)     *C01B 11/24* (2006.01)

(21) Application number: **04028672.6**

(22) Date of filing: **03.12.2004**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(71) Applicant: **Humboldt-Universität zu Berlin**
**D-10099 Berlin (DE)**

(72) Inventors:
• **Kemnitz, Erhard**
  **10405 Berlin (DE)**

• **Gross, Udo**
  **12683 Berlin (DE)**
• **Rüdiger, Stephan**
  **15834 Rangsdorf (DE)**

(74) Representative: **Bohmann, Armin K.**
**Bohmann & Loosen,**
**Anwaltssozietät,**
**Sonnenstrasse 8**
**80331 München (DE)**

(54) **Method for the preparation of X-ray amorphous or weakly crystalline metal oxide fluorides and new uses thereof**

(57)     The present invention is related to a method for preparing an X-ray amorphous or weakly crystalline metal oxide fluoride of a composition represented by the formula $M^{a+}O_bF_c$ comprising the steps of

a) providing a precursor, whereby the precursor is a fluorinated metal compound having a composition which is represented by the formula $M^{a+}F_{(a-d)}B_dL_x$;
b) converting the precursor into an metal oxide/hydroxide fluoride; and
c) calcinating the metal oxide/hydroxide fluoride having the formula $M^{a+}O_eH_fF_c$ to generate the X-ray amorphous or weakly crystalline metal oxide fluoride of the formula $M^{a+}O_bF_c$,

whereby M is selected from the group comprising metals of the first, second, third and fourth main group and any subgroup of the periodic table; B is a group or an anion which is selected from the group comprising alkoxide, enolates, alkyl, chloride, bromide, iodide, nitrate, and organic acid anions; B is preferably an alkoxy group; L is a solvent other than water;

a is any integer of 1, 2, 3, 4, 5 or 6, preferably 2 or 3; and
b and c are any numbers obeying the formula
b/2 + c = a, and c is 0.1b to 10b;
d is a number between 0 and 0.8a, preferable between 0.1 and 0.3a;
e is (a-c+f)/2;
f is a number between 0 and (a-c);
and x is between 0 and 6.

**EP 1 666 411 A1**

**Description**

The present invention is related to a method for preparing X-ray amorphous or weakly crystalline metal oxide fluoride, a catalyst comprising an X-ray amorphous or weakly crystalline metal oxide fluoride, a method for preparing such catalyst and uses of said catalyst.

Metal oxides, metal fluorides and metal oxide fluorides are of great importance to the chemical, pharmaceutical and, e. g., ceramics industry. In particular, inorganic materials having high surface areas are of great interest for, e. g., heterogeneous catalysis where the activity of a catalyst depends largely on its surface.

Metal oxides with very high surface areas can be prepared via sol-gel routes, by freeze-drying or under supercritical conditions as xerogels (c. f. Advanced Catalysts and Nanostructured Materials, editor W.R. Moser: Chapter 2 - The Role of Prehydrolysis in the Preparation of Zr-Si Aerogels by J.B. Miller and E.I. Ko, Academic Press, San Diego, 1996) or aerogels.

A particularly preferred metal fluoride catalyst is aluminium trifluoride, which is used as a Lewis acidic catalyst for industrial fluorination. The synthesis, characteristics and uses of such aluminium fluorides are described in E. Kemnitz and D.-H. Menz, Prog. Solid St. Chem. 26 (1998), p. 97-153. Aluminium fluoride based catalysts such as $AlF_3$ exhibit an octahedral arrangement of fluorine atoms, the aluminium atoms of which are thus saturated in a coordinative manner. Because of this arrangement these $AlF_3$ species exhibit a comparatively low Lewis acidity. In addition, the crystalline structure goes along with a limited specific surface of, e. g., 0.5 to 30 $m^2/g$ which is disadvantageous as the activity of a solid phase or heterogeneous catalyst strongly depends on its specific surface area. Aluminium fluorides can be produced using wet-chemical synthesis and subsequent controlled dehydration. Alternatively, non-wet-chemical synthesis routes are reported. Ziegler, K. and Köster, R., Liebigs Ann. Chem. 608 (1957) 1-7 describe the synthesis of aluminium trifluoride using aluminium trialkyl and boron trifluoride as starting materials. DE 4041771 describes the fluorination of aluminium chloride using anhydrous hydrogen fluoride. US 5,157,171 discloses the fluorination of $AlCl_3$ using chlorofluorocarbons. Both methods result in an $AlCl_xF_{3-x}$ which still contains chlorine. This residual chlorine is responsible for both the observed high acidity and the high hygroscopicity. The product resulting from both methods is also referred to as aluminium chlorofluoride, ACF. Because of its hygroscopicity ACF is extremely difficult to be used in technical applications. Also, ACF is rapidly deactivated upon, e. g., contacting H containing organic solvents such as ethers, alcohols and the like. In addition, the particular fluorination process cannot be transferred to other metal chlorides as only the particular reaction provides the gain in energy required for the conversion of $AlCl_3$ into $AlF_3$.

By none of the abovementioned synthetic routes metal oxide fluorides can be obtained.

Surface fluorinated aluminium oxide has been prepared by (A. Hess and E. Kemnitz, J. Catal. **1994,** *149,* 449-457) and (P.J. Chupas, M.F. Ciraolo, J.C. Hanson and C.P. Grey, J. Am. Chem. Soc. **2001**, 123, 1694-1702) by fluorination of aluminium oxide with chlorodifluoromethane at higher temperatures. However, by this method no defined fluorination degree throughout the material can be obtained, and the method cannot be applied to magnesium oxide fluoride, a preferred compound of the present invention.

The basic considerations in relation to and the limitations of metal oxide fluoride catalysts as described above, also apply for doped metal oxide fluoride catalysts. Doped metal oxide fluoride catalysts can be particularly advantageous as it is known that in metal oxide as well as metal fluoride based catalysts a partial replacement of host metal atoms by doping metal atoms has a strong influence on the activity and/or selectivity of the respective catalyst.

The problem underlying the present invention is thus to provide a method for preparing an amorphous or weakly crystalline metal oxide fluoride, preferably an X-ray amorphous metal oxide fluoride, having a high active surface and preferably being catalytically active. It is a further problem underlying the present invention to provide a metal oxide fluoride based catalyst which has a high specific surface and is moisture resistant, i. e. it may be handled in open air without becoming irreversibly deactivated.

According to the present invention the problem is solved in a first aspect by a method for preparing an X-ray amorphous or weakly crystalline metal oxide fluoride of a composition represented by the formula $M^{a+}O_bF_c$ comprising the steps of

a) providing a precursor, whereby the precursor is a fluorinated metal compound having a composition which is represented by the formula $M^{a+}F_{(a-d)}B_dL_x$;

b) converting the precursor into an X-ray amorphous oxide/hydroxide fluoride; and

c) calcinating the X-ray amorphous metal oxide/hydroxide fluoride having the formula $M^{a+}O_eH_fF_c$ to generate the X-ray amorphous oxide fluoride of the formula $M^{a+}O_bF_c$.
whereby
M is selected from the group comprising metals of the first, second, third and fourth main group and any subgroup of the periodic table; B is a group or an anion which is selected from the group comprising alkoxide, enolates, alkyl, chloride, bromide, iodide, nitrate, and organic acid anions; B is preferably an alkoxy group; L is a solvent other than water;
a is any integer of 1, 2, 3, 4, 5 or 6, preferably 2 or 3; and
b and c are any numbers obeying the formula
b/2 + c = a, and c is 0.1b to 10b;

d is a number between 0 and 0.8a, preferable between 0.1 and 0.3a;

e is (a-c+f)/2;

f is a number between 0 and (a-c);

and x is between 0 and 6.

In an embodiment, the organic acid anion is selected from the group comprising formic acid, acetic acid, propionic acid and butyric acid, each in its divers forms such its iso form.

In an embodiment the conversion in step b) is performed

either by thermal treatment of the precursor, preferably if the precursor contains a metal oxygen bond

or by hydrolysis of the precursor.

In a further embodiment the precursor contains a metal oxygen bond. Preferably such metal oxygen bond is established between the metal moiety and another moiety selected from the group comprising alkoxides, enolates, nitrates and salts of organic acids, each as defined herein. Hydrolysis is preferred in case the oxygen containing precursor is or comprises an alkoxide or an enolate.

In an embodiment the reaction conditions for the thermal treatment are 150°C to 800 °C, preferably 250°C to 450 °C

In an embodiment the hydrolysis is carried out using a water containing fluid, whereby the water containing fluid is preferably selected from the group comprising water, aqueous systems and mixtures of water and at least one organic solvent. It is also within the present invention that the organic solvent is the same as the organic solvent referred to and defined herein as "L".

In an embodiment the precursor is mixed with another hydrolysable metal compound M'E, whereby M' is different from M and E is a group or an anion selected from the group comprising alkoxide, enolate, alkyl, chloride, bromide and iodide, whereby preferably the hydrolysis is carried out such that the final product contains the M' as an oxide. This can be achieved by hydrolysis using reaction parameters as disclosed herein for any hydrolysis reaction and subsequent calcinations using reaction parameters as disclosed herein for any calcinations process. More preferably, M' is selected from the same group as defined herein for M.

In an embodiment the amount of water added for hydrolysis is about 5 to 50 mol% of the metal content of the precursor.

In an embodiment the temperature for the calcinating step is from about 100°C to about 700°C, preferably from about 250 °C to about 450 °C. More preferably, the heating is performed under ambient pressure. The preferred reaction vessel is a flow reactor. Even more preferably, the reaction is run under a flow of gas, whereby the gas is preferably an inert gas and whereby the gas is preferably selected from the group comprising helium, argon, nitrogen, oxygen and any mixture of any of these gases.

In an embodiment the precursor and/or the metal oxide fluoride comprises two or more different metals. Preferably, both the precursor and the metal oxide fluoride comprise two or more different metal.

In an embodiment B is selected from the group comprising alkoxides, enolates and salts of carboxylic acid whereby each and any of the groups preferably have a length of 1 to 5 C atoms. This preferred length applies to any of these groups as used herein, irrespective of whether the individual group is related to B. As used herein the term " a length of 1 to 5 C-atoms" means 1, 2, 3, 4, or 5 C-atoms.

In an embodiment B is selected from alkoxides.

In an embodiment the precursor is made from a compound of the formula

$$M^{a+}B_aL_x$$

whereby

M, a, x and B are defined as in any of the preceding claims;

L is a solvent different from water.

In an embodiment the precursor is prepared by

- providing the metal component of the precursor as an anhydrous metal compound, preferably as $M^{a+}B_aL_x$, with M, B, L, a and x being defined as in any of the preceding claims, and

- reacting said metal component with anhydrous hydrogen fluoride.

In an embodiment the precursor, the starting material for the precursor, or the fluorinating agent for the preparation of the precursor is present in or introduced into an anhydrous organic solvent.

In a preferred embodiment the anhydrous organic solvent is preferably selected from the group comprising alcohols, ethers, ketones, formic acid, acetic acid and propionic acid.

In an embodiment the metal oxide fluoride is $MgO_dF_{2-2d}$, wherein d is 0.01 to 0.5, more preferred 0.05 to 0.2.

In an embodiment the X-ray amorphous or weakly crystalline metal oxide fluoride is a catalyst, preferably a heterogenous catalyst.

According to the present invention the problem is solved in a second aspect by a method for the manufacture of a catalyst comprising an X-ray amorphous or weakly crystalline metal oxide fluoride of the formula $M^{a+}O_bF_c$,

whereby

M is selected from the group comprising metals of the first, second, third and fourth main group and any subgroup of the periodic table, b and c are as defined in claim 1,

comprising the steps of the method according to any of claims 1 to 16, wherein the metal oxide fluoride is the catalyst.

According to the present invention the problem is solved in a third aspect by an X-ray amorphous or weakly crystalline metal oxide fluoride obtainable by a method according to the first aspect of the present invention.

According to the present invention the problem is solved in a fourth aspect by a catalyst obtainable by a method according to the first aspect of the present invention.

According to the present invention the problem is solved in a fifth aspect by a catalyst comprising an X-ray amorphous or weakly crystalline metal oxide fluoride of the formula $M^{a+}O_bF_c$,

whereby

M is selected from the group comprising metals of the second, third and fourth main group and any subgroup of the periodic table,

a is any integer of 1, 2, 3, 4, 5 or 6; and

b and c are any numbers obeying the formula b/2 + c = a, and c is 0.1b to 10b;

which is catalytically active and preferably having an active surface of about 100-400 $m^2$/g, preferably 150-350 $m^2$/g.

According to the present invention the problem is solved in a sixth aspect by an industrially producible catalyst, preferably a catalyst according to the fourth and fifth aspect of the present invention, containing an X-ray amorphous or weakly crystalline metal oxide fluoride of the formula $M^{a+}O_bF_c$.

whereby

M is selected from the group comprising metals of the first, second, third and fourth main group and any subgroup of the periodic table,

a is any integer of 1, 2, 3, 4, 5 or 6; and

and b and c are any numbers obeying the formula b/2 + c = a,

and c is 0.1b to 10b;

being catalytically active and preferably having an active surface of about 100-400 $m^2$/g, preferably 150-350 $m^2$/g.

In an embodiment of the catalyst according to the fourth to the sixth aspect of the present invention, M is selected from the group comprising Zn, Sn, Cu, Fe, Cr, V, Mg and Al, whereby preferably M has a charge of +2 or +3.

In an embodiment of the catalyst according to the fourth to the sixth aspect of the present invention, any of M is used as $M^{x+}F_{x-\delta}$, as guest component or as host component.

In an embodiment of the catalyst according to the fourth to the sixth aspect of the present invention, the catalyst comprises two different M, whereby a first M is part of the host component and a second M is part of the guest component.

In an embodiment of the catalyst according to the fourth to the sixth aspect of the present invention, any of M is used as $M^{x+}F_{x-\delta}$, as host component to accommodate a metal oxide $M'_yO_z$ with M' ≠M, wherein said metal oxide is bound via a M'-O-M bond.

In an embodiment of the catalyst according to the fourth to the sixth aspect of the present invention, any M is used in the form of $M^{x+}F_{x-\delta}$, as host component to accommodate a metal oxide $M'_yO_z$ with M' being different from M.

In an embodiment of the fourth to the sixth aspect of the present invention, the catalyst is to be used as solid catalyst for oxidation processes.

In an embodiment of the fourth to the sixth aspect of the present invention, the catalyst is to be used as solid acid or solid base catalyst.

The present inventors have surprisingly found that an X-ray amorphous or weakly crystalline metal oxide fluoride preferably having a highly distorted lattice can be prepared by using distinct classes of a precursor molecule and subjecting said precursor molecule to either thermal treatment or hydrolysis. Such metal oxide fluorides have a high surface area, are an X-ray amorphous or weakly crystalline solid of a strongly distorted solid state structure. Additionally, the irregularities and disorder of the structural arrangement result in a mesoporous surface. Metal oxide fluorides are less strong Lewis acids in case of Lewis acidic metals than the respective metal fluorides. Rather the metal oxide fluorides as disclosed herein have a certain degree of basicity compared to metal fluorides the extent of which can be modulated so as to provide different metal oxide fluorides having different basicity. These effects attribute to tailored catalytic properties for a variety of reactions, such as, e.g., halogen exchange reactions, dismutations and isomerisations of CFCs/HCFCs as well as Friedel-Crafts alkylations acylations, and oxidations respectively.

Such amorphous metal oxide fluoride which is referred to herein as the metal oxide fluoride according to the present invention, has the general formula

$$M^{a+}O_bF_{c,}$$

whereby a is any integer of 1, 2, 3, 4, 5 or 6, preferably 2 or 3; and b and c are any numbers obeying the formula b/2 + c = a, and c is 0.1b to 10b.

As used herein and if not indicated to the contrary, amorphous or weakly crystalline metal oxide fluoride is the same as highly distorted metal oxide fluoride. The amorphous metal oxide fluoride according to the present invention is X-ray amorphous. X-ray amorphous, as described herein, preferably means that the X-ray diffraction pattern shows no peaks. Weakly crystalline, as described herein, preferably means that the X-ray diffraction pattern shows at least one peak the intensity of which is, however, nearly as low as the background is. Without wishing to be bound by any theory, it seems that the highly distorted structure of the metal oxide fluoride is critical to the observed catalytic activity as.

It is to be noted that, in principle, the metal oxide fluoride may also be a mixed metal oxide fluoride such that the catalyst is a doped catalyst. The metal component of the metal oxide fluoride and the catalyst, respectively, is preferably any divalent or trivalent metal and transition metal, respectively. Preferably, the metal component is selected from the group comprising Zn, Sn, Cu, Fe, Cr, V, Mg, and Al, whereby any of said metals may either alone or in combination be used as the independent fluoride compound, as guest component or as host component and respective compound. In a further preferred embodiment, the metal component may be Fe, Cr, V, Mg or Al, whereby any of said metals may either alone or in combination be used as the independent metal fluoride, as the guest compound or the host compound. In any of these embodiments, Mg is a preferred host compound in case of doped catalysts. In a further preferred embodiment the metal component is Mg, either as independent metal fluoride or preferably as a host component for other metal fluorides, preferably those mentioned herein. In a further embodiment Al is used as an independent metal fluoride or as host component or as guest component. Most preferably the metal component is Al, either as an independent fluoride or as host component or as guest component as used in connection with the catalyst according to the present invention. As used herein the term independent metal oxide fluoride is meant to be the catalytically active metal fluoride, the guest compound or guest component is meant to be the doped component or compound of a doped catalyst and the host compound or host component is meant to be the matrix for the guest compound or guest component in case of doped catalysts, whereby the host compound or host component can be either an inert or a catalytically active matrix.

The catalytically active metal oxide fluorides according to the present invention are applicable in any reaction where the metal fluorides of the state of the art may be used. Such reactions comprise, however are not limited to halogen exchange reactions, dismutations and isomerisations of CFCs/HCFCs as well as Friedel-Crafts alkylations acylations, and oxidations respectively. Also, the catalytically active metal fluorides may be used in any catalysis where a Lewis acid or a Lewis base catalyst is used.

Further, the metal oxide fluorides of the present invention can be used for glass coatings and for manufacture of ceramics and optical devices.

The invention is now further illustrated by the examples from which further features, embodiments and advantages may be taken.

### Example 1: Preparation of $MgO_{0.4}F_{1.2}$

24.3 g (1 mol) magnesium chips are reacted in 500 ml dry methanol to magnesium methylate. 240 ml of 5 M solution of hydrogen fluoride in ether (1.2 mol) are added thereto under steering and cooling. Subsequently 28.8 ml (1.6 mol) water are added. All volatile components are removed under vacuo after 2 hours, whereby a white powder is obtained.

The powder is calcinated under an argon atmosphere at 350°C for 3 hours. The thus obtained $MgO_{0.4}F_{1.2}$ has a specific surface of 363 $m^2$/g and a fluoro content of 28.1 % corresponding to $MgO_{0.64}F_{0.72}$ as well as a carbon content of 2.86 % and H 1.57 %.

### Example 2: Preparation of 2-(γ-oxobutyl)-2-methylcyclohexane-1,3-dione

1.6 g (22.5 mmol) methylvinyl ketone, 1.9 g (15 mmol) 2-methyl cyclohexane-1,3-dione, 0.7 g dimethylphthalate (internal standard) and 10 ml methanol are steered in a 50 ml flask at room temperature, whereupon 0.225 g of the catalyst as manufactured in example 1 are added. After 2 hours the reaction is terminated, the catalyst removed by centrifugation and methanol as well as remaining methylvinylketon removed by distillation. $_1$H-NMR analysis based on the integrales of the methyl group of dimethylphthalate and of 2-(γ-oxobutyl)-2-methyl cyclohexane-1,3-dione of the product mixture dissolved in DMSO-$d_6$ result in a yield of 1.62 g (55 %) of 2-(γ-oxobutyl)-2-methylcyclohexane-1,3-dione.

### Example 3: Preparation of $AlV_{0.1}O_{0.1}F_{3.3}$

Aluminium isopropylate is dissolved in excessive isopropanol under gentle warming and stirring. The solution is cooled to about 0°C in an ice bath, than hydrofluoric acid dissolved in diethyl ether is added under stirring in an amount that the molar ratio of Al : F is 1 : 2. The mixture is stirred further for about 20 min, followed by addition of 10 mol% with respect to Al of $VO(OiPr)_3$ and such an amount of water that the molar ratio is as follows:

$$n(Al(OiPr)_3) : n(HF) : n(H_2O) = 1 : 2 : 1$$

This mixture is stirred another 2 hrs and then kept over night to allow aging. Next day the isopropanol is removed under vacuum at about 70°C and the resulting solid is calcined in a flow system under air (20 ml/min) as follows:

Heating rate 5°C/min; 1 hr at 150°C, 1 h at 200°C, 1 h at 250°C, 1 h at 300°C and 5 h at 350°C.

### Example 4: Oxidative dehydrogenation of propane to propene

The catalyst as prepared in example 3 was used for oxidative dehydrogenation of propane to propene. In a tube-type reactor 100 mg catalyst was heated for 1 h at 500°C under nitrogen followed by by a mixture of 20 vol% $N_2$, 50 vol% $O_2$ and 30 vol% propane (35.5 ml/min).

Under these conditions, 35.6 % of the propane was converted yielding 12.5 % propene corresponding to a selectivity for propene of 35.1 %.

The features of the present invention disclosed in the specification, the claims and/or the drawings may both separately and in any combination thereof be material for realizing the invention in various forms thereof.

## Claims

1. A method for preparing an X-ray amorphous or weakly crystalline metal oxide fluoride of a composition represented by the formula $M^{a+}O_bF_c$ comprising the steps of

   a) providing a precursor, whereby the precursor is a fluorinated metal compound having a composition which is represented by the formula $M^{a+}F_{(a-d)}B_dL_x$;
   b) converting the precursor into an metal oxide/ hydroxide fluoride; and
   c) calcinating the metal oxide/hydroxide fluoride having the formula $M^{a+}O_eH_fF_c$ to generate the X-ray amorphous or weakly crystalline metal oxide fluoride of the formula $M^{a+}O_bF_c$,
   whereby
   M is selected from the group comprising metals of the first, second, third and fourth main group and any subgroup of the periodic table; B is a group or an anion which is selected from the group comprising alkoxide, enolates, alkyl, chloride, bromide, iodide, nitrate, and organic acid anions; B is preferably an alkoxy group; L is a solvent other than water;
   a is any integer of 1, 2, 3, 4, 5 or 6, preferably 2 or 3; and
   b and c are any numbers obeying the formula $b/2 + c = a$, and c is 0.1b to 10b;
   d is a number between 0 and 0.8a, preferable between 0.1 and 0.3a;
   e is $(a-c+f)/2$;
   f is a number between 0 and (a-c);
   and x is between 0 and 6.

2. The method according to claim 1, wherein the conversion in step b) is performed
   either by thermal treatment of the precursor, preferably if the precursor contains a metal oxygen bond or by hydrolysis of the precursor.

3. The method according to claim 2, wherein the reaction conditions for the thermal treatment are 150°C to 800 °C, preferably 250°C to 450 °C

4. The method according to claim 2, wherein the hydrolysis is carried out using a water containing fluid, whereby the water containing fluid is preferably selected from the group comprising water, aqueous systems and mixtures of water and at least one organic solvent.

5. The method according to claim 1, wherein the precursor is mixed with another hydrolysable metal compound M'E, whereby M' is different from M and E is a group or an anion selected from the group comprising alkoxide, enolate, alkyl, chloride, bromide and iodide, whereby preferably the hydrolysis is carried out such that the final product contains the M' as an oxide.

6. The method according to any of claims 2 to 5, wherein the amount of water added for hydrolysis is about 5 to 50 mol% of the metal content of the precursor.

7. The method according to any of claims 1 to 6, wherein the temperature for the calcinating step is from about 100°C to about 700°C, preferably from about 250 °C to about 450 °C.

8. The method according to any of claims 1 to 7, wherein the precursor and/or the metal oxide fluoride comprises two or more different metals.

9. The method according to any of claims 1 to 8, wherein B is selected from the group comprising alkoxides, enolates and salts of carboxylic acid whereby each and any of the groups preferably have a length of 1 to 5 C atoms.

10. The method according to any of claims 1 to 9, wherein B is selected from alkoxides.

11. The method according to any of claims 1 to 10, wherein the precursor is made from a compound of the formula

$$M^{a+}B_aL_x$$

   whereby
   M, a, x and B are defined as in any of the preceding claims;
   L is a solvent different from water.

12. The method according to any of claims 1 to 11, wherein the precursor is prepared by

   - providing the metal component of the precursor as an anhydrous metal compound, preferably as $M^{a+}B_aL_x$,
   with M, B, L, a and x being defined as in any of the preceding claims, and

- reacting said metal component with anhydrous hydrogen fluoride.

13. The method according to any of claims 1 to 12, wherein the precursor, the starting material for the precursor, or the fluorinating agent for the preparation of the precursor is present in or introduced into an anhydrous organic solvent.

14. The method according to claim 13, whereby the anhydrous organic solvent is preferably selected from the group comprising alcohols, ethers, ketones, formic acid, acetic acid and propionic acid.

15. The method according to any of claims 1 to 14, wherein the metal oxide fluoride is $MgO_dF_{2-2d}$, wherein d is 0.01 to 0.5, more preferred 0.05 to 0.2.

16. The method according to any of claims 1 to 15, wherein the X-ray amorphous or weakly crystalline metal oxide fluoride is a catalyst, preferably a heterogenous catalyst.

17. A method for the manufacture of a catalyst comprising an X-ray amorphous or weakly crystalline metal oxide fluoride of the formula $M^{a+}O_bF_c$,
whereby
M is selected from the group comprising metals of the first, second, third and fourth main group and any subgroup of the periodic table, b and c are as defined in claim 1, comprising the steps of the method according to any of claims 1 to 16, wherein the metal oxide fluoride is the catalyst.

18. An X-ray amorphous or weakly crystalline metal oxide fluoride obtainable by a method according to any of claims 1 to 17.

19. A catalyst obtainable by a method according to claims 1 to 17.

20. A catalyst comprising an X-ray amorphous or weakly crystalline metal oxide fluoride of the formula $M^{a+}O_bF_c$,
whereby
M is selected from the group comprising metals of the second, third and fourth main group and any subgroup of the periodic table,
a is any integer of 1, 2, 3, 4, 5 or 6; and
b and c are any numbers obeying the formula $b/2 + c = a$,
and c is O.lb to 10b;
which is catalytically active and preferably having an active surface of about 100-400 $m^2/g$, preferably 200-350 $m^2/g$.

21. An industrially producible catalyst, preferably a catalyst according to claim 19 or 20, containing an X-ray amorphous or weakly crystalline metal oxide fluoride of the formula $M^{a+}O_bF_c$.
whereby
M is selected from the group comprising metals of the first, second, third and fourth main group and any subgroup of the periodic table,
a is any integer of 1, 2, 3, 4, 5 or 6; and
and b and c are any numbers obeying the formula $b/2 + c = a$,
and c is O.lb to 10b;
being catalytically active and preferably having an active surface of about 100-400 $m^2/g$, preferably 200-350 $m^2/g$.

22. The catalyst according to any of claims 19 to 21, wherein M is selected from the group comprising Zn, Sn, Cu, Fe, Cr, V, Mg and Al, whereby preferably M has a charge of +2 or +3.

23. The catalyst according to any of claims 19 to 22, wherein any of M is used as $M^{x+}F_{x-\delta}$, as guest component or as host component.

24. The catalyst according to any of claims 19 to 23, wherein any of M is used as $M^{x+}F_{x-\delta}$, as host component to accommodate a metal oxide $M'_yO_z$ with M' ≠M, wherein said metal oxide is bound via a M'-O-M bond.

25. The catalyst according to claim 24, to be used as solid catalyst for oxidation processes.

26. The catalyst according to any of claims 19 to 25, to be used as solid acid or solid base catalyst.

27. A metal oxide fluoride obtainable by a method according to any of claims 1 to 17 to be used for glass coatings or for manufacture of ceramics or optical devices.

**European Patent Office**

## EUROPEAN SEARCH REPORT

Application Number

EP 04 02 8672

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | GB 790 335 A (THE DOW CHEMICAL COMPANY) 5 February 1958 (1958-02-05) | 18,19, 22,27 | C01B9/08 C01F5/28 C01F7/50 C01B11/24 |
| A | * claims 1,4,6,9 * <br> * column 2, line 108 - column 3, line 49 * <br> * column 4, lines 44-53 * <br> * examples * | 1-17 | |
| A | US 4 275 046 A (MCVICKER ET AL) 23 June 1981 (1981-06-23) * column 3, lines 22-45 * | 1-27 | |
| A | EP 1 440 939 A (HUMBOLDT-UNIVERSITAET ZU BERLIN) 28 July 2004 (2004-07-28) * claims 1-4 * | 1-27 | |
| A | US 6 066 305 A (DUGGER ET AL) 23 May 2000 (2000-05-23) * claim 1 * <br> * column 7, lines 47-49 * <br> * column 8, lines 14-55 * | 1-27 | |

| | |
|---|---|
| | TECHNICAL FIELDS SEARCHED (Int.Cl.7) |
| | C01B C01F B01J |

The present search report has been drawn up for all claims

| Place of search | Date of completion of the search | Examiner |
|---|---|---|
| Munich | 17 May 2005 | Rhodes, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 04 02 8672

This annex lists the patent family members relating to the patent documents cited in the above-mentioned European search report.
The members are as contained in the European Patent Office EDP file on
The European Patent Office is in no way liable for these particulars which are merely given for the purpose of information.

17-05-2005

| Patent document cited in search report | | Publication date | Patent family member(s) | | Publication date |
|---|---|---|---|---|---|
| GB 790335 | A | 05-02-1958 | NONE | | |
| US 4275046 | A | 23-06-1981 | CA | 1108377 A1 | 08-09-1981 |
| | | | DE | 2900854 A1 | 19-07-1979 |
| | | | FR | 2414476 A1 | 10-08-1979 |
| | | | GB | 2012256 A ,B | 25-07-1979 |
| | | | JP | 54112395 A | 03-09-1979 |
| | | | US | 4402924 A | 06-09-1983 |
| EP 1440939 | A | 28-07-2004 | EP | 1440939 A1 | 28-07-2004 |
| | | | WO | 2004060806 A1 | 22-07-2004 |
| US 6066305 | A | 23-05-2000 | US | 2002025294 A1 | 28-02-2002 |
| | | | CA | 2131326 A1 | 16-09-1993 |
| | | | CA | 2455428 A1 | 16-09-1993 |
| | | | WO | 9317959 A1 | 16-09-1993 |

EPO FORM P0459

For more details about this annex : see Official Journal of the European Patent Office, No. 12/82